(19) Europäisches Patentamt
European Patent Office
Office européen des brevets

(11) **EP 2 594 484 A2**

(12) **EUROPEAN PATENT APPLICATION**

(43) Date of publication:
**22.05.2013 Bulletin 2013/21**

(51) Int Cl.:
**B64C 39/02** (2006.01)    **G05D 1/00** (2006.01)

(21) Application number: **12184149.8**

(22) Date of filing: **12.09.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **17.11.2011  US 201113299088**<br><br>(71) Applicant: **Honeywell International Inc.**<br>**Morristown, NJ 07962-2245 (US)** | (72) Inventors:<br>• **Hamke, Eric Ehrhardt**<br>**Morristown, NJ New Jersey 07962-2245 (US)**<br>• **Trujillo, Matthew**<br>**Morristown, NJ New Jersey 07962-2245 (US)**<br>• **Enns, Dale**<br>**Morristown, NJ New Jersey 07962-2245 (US)**<br><br>(74) Representative: **Houghton, Mark Phillip**<br>**Patent Outsourcing Limited**<br>**1 King Street**<br>**Bakewell, Derbyshire DE45 1DZ (GB)** |

(54) **Unmanned air vehicle fault tolerant flight control system and method**

(57)    Methods and apparatus are provided for controlling an unmanned air vehicle (UAV) that includes a plurality of independently controllable control vanes. Control vane position commands are supplied that will move each of the control vanes to a position that will cause the UAV to implement a commanded maneuver. Inoperability of one of the control vanes is sensed, and the position of the inoperable control vane is determined. New control vane position commands are determined, based on the determined position of the inoperable control vane, which will also cause the UAV to implement the commanded maneuver.

FIG. 3

**Description**

STATEMENT REGARDING FEDERALLY SPONSORED RESEARCH OR DEVELOPMENT

This invention was made with Government support under W56HZV-05-C-0724 awarded by the U.S. Army (TACOM). The Government has certain rights in this invention.

TECHNICAL FIELD

The present invention generally relates to unmanned air vehicles (UAVs), and more particularly relates to fault tolerant flight control systems and methods for UAVs.

BACKGROUND

Various types of unmanned air vehicles (UAVs) are increasingly being deployed in battlefield, border security, and various other defense and security related theaters. Typical UAV operations may include reconnaissance and surveillance, navigating for troops and ground vehicles, and non-line-of-sight targeting. Accordingly, a UAV may be configured to detect enemy troops, illegal border crossings, and vehicles in areas where ground forces (or even aerial forces) lack a direct line-of-sight.

One particular type of UAV that is becoming increasingly popular is the ducted fan air vehicle. These types of UAVs are known for their superior stationary aerodynamic hovering performance, three-dimensional precision position hold, low speed flights, and precision vertical take-off and landing (VTOL) capabilities. In addition, the duct provides protection from contact with the rotating fan blade close in operations. Ducted fan UAVs are typically maneuvered by controlling the positions of a plurality of control vanes. More specifically, the control vanes are positioned by actuators, which are in turn controlled by a flight control system.

Some current UAV flight control systems do not monitor the vane control actuators for inoperability. The result being that an inoperable control vane could go undetected. Moreover, the control laws in the UAV flight control system do not close the loop on the control vanes. Rather, the control laws close the loop on UAV rotational rates to thereby maintain UAV attitude by forcing these rates to 0°/sec. In the event of an inoperable control vane actuator, the control law allocates control vane deflections in ever increasing amounts to the inoperable control vane actuator in an attempt to stabilize the vehicle, but with no effect. Instead, the net effect is that the UAV may become unstable and potentially lost.

Hence, there is a need for a fault tolerant flight control system and method for UAVs that mitigates the effects of one or more inoperable control vane actuators so that an operator can controllably land the UAV with little or no risk of loss. The present invention addresses at least this need.

BRIEF SUMMARY

In one embodiment, a method for controlling an unmanned air vehicle (UAV) that has a plurality of independently controllable control vanes includes supplying control vane position commands that will move each of the control vanes to a position that will cause the UAV to implement a commanded maneuver. Inoperability of one of the control vanes is sensed, and the position of the inoperable control vane is determined. New control vane position commands are determined, based on the determined position of the inoperable control vane, that will also cause the UAV to implement the commanded maneuver.

In another embodiment, a flight control system for an unmanned air vehicle (UAV) that includes a plurality of independently controllable control vanes includes a plurality of independent control vane actuators, an actuator controller, and a mission controller. Each control vane actuator is coupled to a different one of the control vanes. The actuator controller is coupled to the control vane actuators and is further coupled to receive control vane position commands. The actuator controller is configured, in response to the control vane position commands, to control the control vane actuators to move each of the control vanes to a position that will cause the UAV to implement a commanded maneuver. The mission controller is coupled to the actuator controller and is configured to supply the control vane position commands. The mission controller is further configured to sense that one of the control vanes is inoperable, determine the position of the inoperable control vane, and determine new control vane position commands, based on the determined position of the inoperable control vane, that will also cause the UAV to implement the commanded maneuver.

In another embodiment, a ducted fan unmanned air vehicle includes a main body, a fan, a plurality of independently controllable control vanes, a plurality of independent control vane actuators, an actuator controller, and a mission controller. The main body includes an inner surface that defines an air duct having an air inlet and an air outlet. The fan is disposed within the duct between the air inlet and air outlet. The fan is adapted to receive a drive torque and is operable, in response thereto, to draw air into the air inlet and discharge air out of the air outlet, thereby generating a lift on the main body. Each control vane is coupled to the main body downstream of the air outlet. Each control vane actuator is coupled to a different one of the control vanes. The actuator controller is coupled to the control vane actuators and is further coupled to receive control vane position commands. The actuator controller is configured, in response to the control vane position commands, to control the control vane actuators to move each of the control vanes to a position that will cause the UAV to implement a commanded maneuver. The mission controller is coupled to the actuator controller and is configured to supply the control vane position commands. The mission controller is further configured to sense that one of the control vanes is inoperable, determine the position of the inoperable control vane, and determine new control vane position commands, based on the determined position of the inoperable control vane, that will also cause the UAV to implement the commanded maneuver.

Furthermore, other desirable features and characteristics of the UAV fault tolerant flight control system and method will become apparent from the subsequent detailed description and the appended claims, taken in conjunction with the accompanying drawings and the preceding background.

BRIEF DESCRIPTION OF THE DRAWINGS

The present invention will hereinafter be described in conjunction with the following drawing figures, wherein like numerals denote like elements, and wherein:

FIG. 1 depicts a simplified representation of one example of an embodiment of an unmanned air vehicle (UAV);

FIG. 2 depicts a bottom view of the UAV depicted in FIG. 1, illustrating the placement of control vanes thereon;

FIGS. 3 and 4 depict functional block diagrams of two different embodiments of exemplary flight control systems that may be used to control the UAV of FIG. 1;

FIGS. 5-7 depict bottom views of the UAV of FIG. 1 to illustrate how the the trailing edges of the control vanes are moved to implement roll/aileron, pitch/elevator, yaw/rudder maneuvers, respectively.

FIG. 8 depicts a process, in flowchart form, for controlling the UAV of FIG. 1 to mitigate one or more inoperable control vanes.

DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

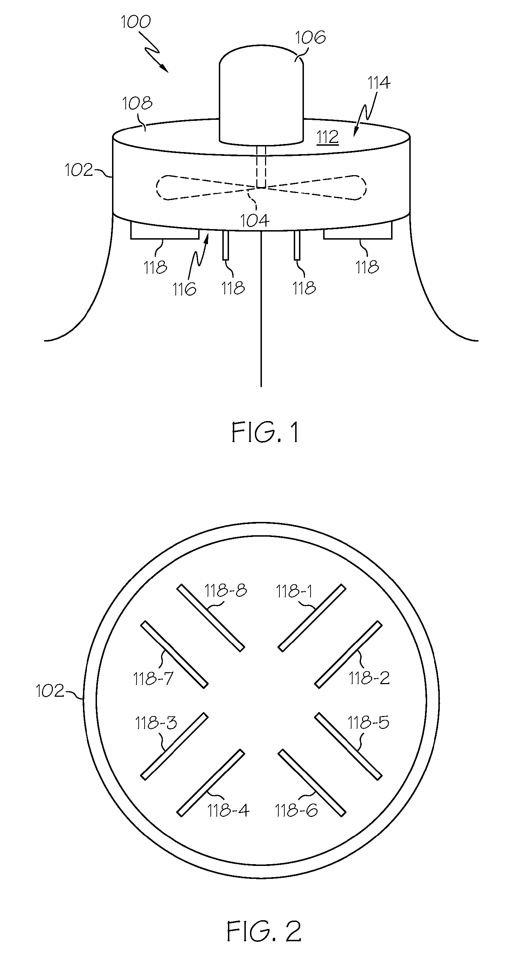

Referring to FIG. 1, a simplified representation of one example of an embodiment of an unmanned air vehicle (UAV) is depicted and will be briefly described.

Before doing so, however, it is noted that while the depicted UAV 100 is implemented as a micro air vehicle (MAV), this is merely exemplary of one embodiment and the UAV 100 could be variously implemented. For example, it could be implemented as an organic air vehicle (OAV) or any one of numerous other types of ducted-fan aerial vehicles.

No matter its specific implementation, the depicted UAV 100 includes a main body 102, a fan 104, and an engine 106. The main body 102 has an inner surface 108 that defines an air duct 112 having an air inlet 114 and an air outlet 116. The fan 104 is disposed within the air duct 112 between the air inlet 114 and air outlet 116. The fan 104 is coupled to, and receives a drive torque from, the engine 106. In response to the received drive torque, the fan 104 draws air into the air inlet 114 and discharge air out of the air outlet 116, thereby generating lift for flight.

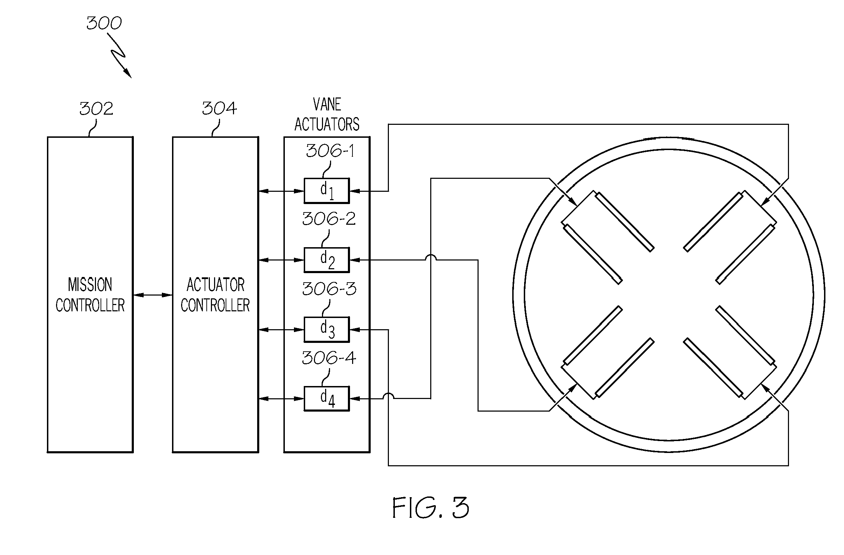

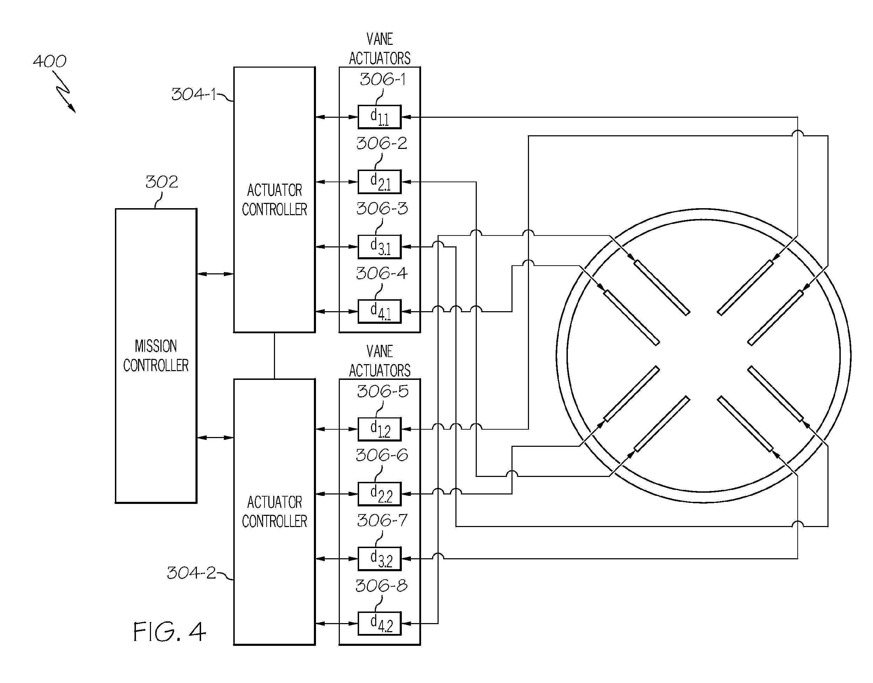

As FIG. 1 further depicts, the UAV 100 additionally includes a plurality of control vanes 118. The control vanes 118 are disposed downstream of the fan 104, and are controllably moved to provide maneuverability to the UAV 100. Although the number and location of the control vanes 118 may vary, in the depicted embodiment the UAV 100 includes eight control vanes 118 located just downstream of the air outlet 116. As depicted more clearly in FIG. 2, the control vanes 118 are disposed in pairs - a first pair 118-1, 118-2, a second pair 118-3, 118-4, a third pair 118-5, 118-6, and a fourth pair 118-7, 118-8. The control vanes 118 that comprise each pair are preferably operated together. In some embodiments, the control vanes 118 that comprise each pair are coupled together and moved via a single actuator. In other embodiments, the control vanes 118 are each coupled to an independent actuator. In both instantiations, the control vanes 118 are controllably moved via a flight control system. Two different embodiments of exemplary flight control systems are depicted in FIGS. 3 and 4, and will now be described.

Referring first to FIG. 3, this flight control system 300 is configured to control a UAV 100 that is implemented with coupled (or ganged) pairs of flight control vanes 118. That is, as was noted above, the first pair of control vanes 118-1, 118-2 are coupled together, the second pair of control vanes 118-3, 118-4 are coupled together, the third pair of control vanes 118-5, 118-6 are coupled together, and the fourth pair of control vanes 118-7, 118-8 are coupled together. The depicted flight control system 300 includes a mission controller 302, an actuator controller 304, and a plurality of actuators 306 (e.g., 306-1, 306-2, 306-3, 306-4). The mission controller 302 is adapted to receive flight control commands representative of a commanded maneuver from, for example, a remote transmitter. The mission controller 302 is configured, in response to the flight control commands, to implement control laws, which are discussed further below, to generate and supply control vane position commands. The control vane position commands, which are supplied to the actuator controller 304, are representative of control vane positions (e.g., deflections (d)).

The actuator controller 304 is coupled to receive the control vane position commands supplied by the mission controller 302 and is configured, in response thereto, to control the actuators 306 to move the control vanes 118 to the commanded positions. The actuators 306 are each coupled to, and associated with, a different pair of control vanes 118. Thus, movement of each of the actuators 306 causes movement (e.g., deflection) of each of the associated pairs of control vanes 118 to the commanded control vane positions. As may be appreciated, movement of the control vanes 118 to the commanded control vane positions will cause the UAV 100 to implement the commanded maneuver.

Referring now to FIG. 4, a flight control system 400 that is configured to control a UAV 100 that is implemented with independently movable control vanes 118 is depicted. The depicted flight control system 400 also includes a mission controller 302, two independent actuator controllers 304 (304-1, 304-2), and a plurality of actuators 306. As may be readily appreciated, the number of actuators 306 is twice that of the previously described embodiment (e.g., 306-1, 306-2, 306-3, 306-4, 306-5, 306-6, 306-7, 306-8). The mission controller 302, actuator controller 304, and actuators 306 are all preferably configured at least substantially identically to that of the previously described embodiment, thus detailed descriptions thereof will not be repeated. The main difference, of course, is that the actuators 306 are each coupled to a different control vane 118. Thus, movement of the individual control vanes 118 to the commanded control vane positions causes the UAV 100 to implement the commanded maneuver.

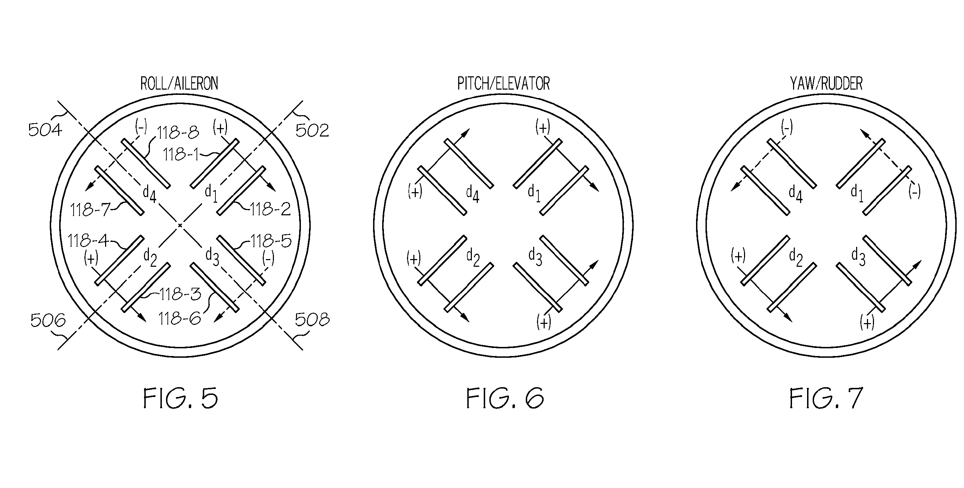

Whether the control vanes 118 are coupled as pairs to single actuators 306 or are individually coupled to separate actuators 306, because the pairs of control vanes 118 are clocked by 45-degrees and separated by 90-degrees, each pair of control vanes 118 contributes to roll (or aileron), pitch (or elevator), and yaw (or rudder) maneuvers. This will be more clearly described with reference to FIGS. 5-7, and using the following vane deflection convention: the combined deflection of the first pair of control vanes 118-1, 118-2 is referenced as "$d_1$," the combined deflection of the second pair of control vanes 118-3, 118-4 is referenced as "$d_2$," the combined deflection of the third pair of control vanes 118-5, 118-6 is referenced as "$d_3$," and the combined deflection of the fourth pair of control vanes 118-7, 118-8 is referenced as "$d_4$." Moreover, the axes labeled 502 and 504 in FIG. 5 that extend through reference points 506 and 508, respectively, are reference axes. On this basis, control vanes deflections in a clockwise (CW) direction about reference axis 502, from the standpoint of reference point 506, or about reference axis 504, from the standpoint of reference point 508, are depicted using solid-line arrows and are assigned a positive (+) sign. Conversely, control vanes deflections in a counterclockwise (CCW) direction about reference axis 502, from the standpoint of reference point 506, or about reference axis 504, from the standpoint of reference point 508, are depicted using dashed-line arrows and are assigned a negative (-) sign.

With the above-described conventions in mind, it is seen in FIG. 5 that a roll/aileron maneuver of the UAV 100 in one direction may be implemented by commanding the first and second pairs of control vanes ($d_1$, $d_2$) to both rotate in the CW (+) direction and the third and fourth pairs of control vanes ($d_3$, $d_4$) to both rotate in the CCW (-) direction. As FIG. 6 depicts, a pitch/elevator maneuver of the UAV 100 in one direction may be implemented by commanding the first, second, third, and fourth pairs of control vanes ($d_1$, $d_2$, $d_3$, $d_4$) to all rotate in the CW (+) directions. Finally, as FIG. 7 depicts, a yaw/rudder maneuver of the UAV 100 in one direction may be implemented by commanding the first and fourth pairs of control vanes ($d_1$, $d_4$) to both rotate in the CCW (-) direction and the second and third pairs of control vanes ($d_2$, $d_3$) to both rotate in the CW (+) direction. Though not depicted in FIGS. 5-7, it will be appreciated that roll/aileron, pitch/elevator, and yaw/rudder maneuvers in opposite directions from those depicted may be implemented by reversing the rotational directions of the respective pairs of control vanes.

From the above, the skilled artisan will appreciate that the control vane deflections ($d_1$, $d_2$, $d_3$, $d_4$) commanded by the flight control system 300, 400 implement equivalent control surface deflections. These equivalent control surface deflections are referred to in the remainder of this disclosure as aileron ($\delta a$), elevator ($\delta e$), and rudder ($\delta r$) deflections. The skilled artisan will additionally appreciate that the relationship between the control vane deflections ($d_1$, $d_2$, $d_3$, $d_4$) and the control surface deflections (aileron ($\delta a$), elevator ($\delta e$), and rudder ($\delta r$)) may be shown in the following equations:

$$d_1 = \delta a + \delta e - \delta r + \delta n$$

$$d_2 = \delta a + \delta e + \delta r - \delta n$$

$$d_3 = -\delta a + \delta e + \delta r + \delta n$$

$$d_4 = -\delta a + \delta e - \delta r - \delta n$$

$$\delta a = \frac{1}{4}\left(d_1 + d_2 - d_3 - d_4\right)$$

$$\delta e = \frac{1}{4}\left(d_1 + d_2 + d_3 + d_4\right)$$

$$\delta r = \frac{1}{4}\left(-d_1 + d_2 + d_3 - d_4\right)$$

$$\delta n = \frac{1}{4}\left(d_1 - d_2 + d_3 - d_4\right).$$

These equations can be rewritten in standard matrix notation, as follows:

$$\begin{bmatrix} d_1 \\ d_2 \\ d_3 \\ d_4 \end{bmatrix} = \begin{bmatrix} 1 & 1 & -1 & 1 \\ 1 & 1 & 1 & -1 \\ -1 & 1 & 1 & 1 \\ -1 & 1 & -1 & -1 \end{bmatrix} \begin{bmatrix} \delta a \\ \delta e \\ \delta r \\ \delta n \end{bmatrix}$$

$$\begin{bmatrix} \delta a \\ \delta e \\ \delta r \\ \delta n \end{bmatrix} = \frac{1}{4} \begin{bmatrix} 1 & 1 & -1 & -1 \\ 1 & 1 & 1 & 1 \\ -1 & 1 & 1 & -1 \\ 1 & -1 & -1 & -1 \end{bmatrix} \begin{bmatrix} d_1 \\ d_2 \\ d_3 \\ d_4 \end{bmatrix}$$

The control law implemented in the mission controller 302 solves for the "idealized" control surface deflections ($\delta a$, $\delta e$, and $\delta r$). It should be noted that the $\delta n$ term is referred to herein as the "no use term." This is because it is not used in the control law, and is thus assumed to be zero. That is,

$$\delta n = \frac{1}{4}\left(d_1 - d_2 + d_3 - d_4\right) = 0°$$

With this assumption, the deflection equations become:

$$d_1 = \delta a + \delta e - \delta r$$

$$d_2 = \delta a + \delta e + \delta r$$

$$d_3 = -\delta a + \delta e + \delta r$$

$$d_4 = -\delta a + \delta e - \delta r$$

$$\delta a = \frac{1}{4}\left(d_1 + d_2 - d_3 - d_4\right)$$

$$\delta e = \frac{1}{4}\left(d_1 + d_2 + d_3 + d_4\right)$$

$$\delta r = \frac{1}{4}\left(-d_1 + d_2 + d_3 - d_4\right)$$

When the UAV 100 is operating properly, with no stuck or otherwise inoperable actuators 306 or control vanes 118, the above calculation is carried out subject to the following constraints:

$$d_{min} \le d_1 \le d_{max}$$

$$d_{min} \le d_2 \le d_{max}$$

$$d_{min} \le d_3 \le d_{max}$$

$$d_{min} \le d_4 \le d_{max}$$

$$r_{min} \le \frac{d_1}{dt} \le r_{max}$$

$$r_{min} \le \frac{d_2}{dt} \le r_{max}$$

$$r_{min} \le \frac{d_3}{dt} \le r_{max}$$

$$r_{min} \le \frac{d_4}{dt} \le r_{max}$$

where,

$d_{min}$ is the minimum control vane deflection angle,
$d_{max}$ is the maximum control vane deflection angle,
$r_{min}$ is the minimum control vane angular rate of change, and
$r_{max}$ is the maximum control vane angular rate of change.

It should be noted that the control law runs in real time, and is thus a computationally fast algorithm that reliably generates smoothly varying actuator commands that do not "chatter" back and forth from one time step to the next. Such chattering can reduce the life of the actuators 306. The control law allocates the control vane deflections ($d_1, d_2, d_3, d_4$) by seeking to find optimal control surface deflections ($\delta a, \delta e, \delta r$), and does so by minimizing the below linear system of $m$ equations and $n$ unknowns, subject to the position and rate constraints:

$$\mathbf{Bu} = \mathbf{d}$$

where,

**B** is a matrix containing the coefficients of the equations in the linear system with $m$ rows (equations) and $n$ variables (unknowns),
**u** is the vector of $n$ unknowns that provides the lowest value of cost function, and
**d** is the vector of $m$ elements that contains the desired value for each equation (right hand side).

Using the above-noted system of equations (which includes the assumption that $\delta n=0$) yields the following:

$$\begin{bmatrix} \delta a \\ \delta e \\ \delta r \end{bmatrix} = \frac{1}{4} \begin{bmatrix} 1 & 1 & -1 & -1 \\ 1 & 1 & 1 & 1 \\ -1 & 1 & 1 & -1 \end{bmatrix} \begin{bmatrix} d_1 \\ d_2 \\ d_3 \\ d_4 \end{bmatrix}$$

where,

$$\mathbf{B} = 1/4 \begin{bmatrix} 1 & 1 & -1 & -1 \\ 1 & 1 & 1 & 1 \\ -1 & 1 & 1 & -1 \end{bmatrix}$$

$$\mathbf{d} = \begin{bmatrix} \delta a \\ \delta e \\ \delta r \end{bmatrix}$$

$$\mathbf{u} = \begin{bmatrix} d_1 \\ d_2 \\ d_3 \\ d_4 \end{bmatrix}$$

$$\mathbf{u}_p = \begin{bmatrix} d_{1p} \\ d_{2p} \\ d_{3p} \\ d_{4p} \end{bmatrix}$$

When there are more unknowns than equations ($n > m$), there are an infinite number of solutions. Thus, to limit the solution set, an additional constraint is implemented. This additional constraint is that the solution (**u**) shall approximate a specified preferred solution (**u**$_p$). This approach is given by the following quadratic cost function:

$$\text{minimize}\left(\frac{1}{2}\left(\mathbf{u} - \mathbf{u}_p\right)^T \mathbf{W}_p \left(\mathbf{u} - \mathbf{u}_p\right)\right)$$

Where **W**$_p$ is the weighting matrix that emphasizes the importance of solving for the $n$ unknowns relative to one another and is constrained such that:

$$\mathbf{W}_p = \mathbf{W}_p^T > 0$$

This constraint on **W**$_p$ forces the matrix to be positive definite.

Having described the overall structure and function of the UAV 100, and the control algorithm that is implemented in the flight control system 300, 400, a more detailed description will now be provided of the process that the flight control system 300, 400 implements in the unlikely, yet postulated event of one or two control vanes becoming inoperable. Before doing so, however, it is noted that the flight control system 300, 400 may be implemented, at least in some embodiments, without any actuator position feedback. When actuator position feedback is not available, the last control vane position command sent prior to the actuator/control vane becoming inoperable is assumed to be failed position. This is a valid assumption since the actuators 306 that are typically used will "lock" in the failed position.

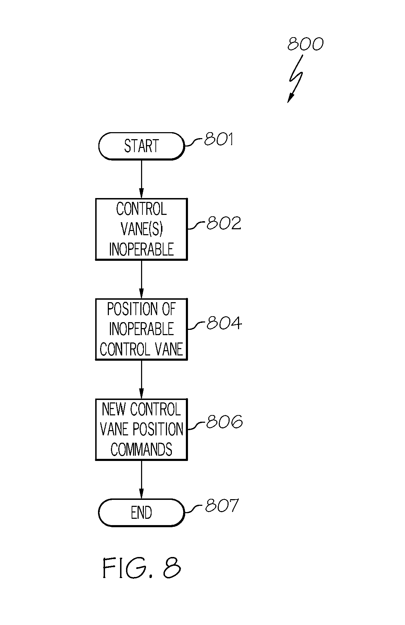

The general process that the flight control system 300, 400 implements is depicted in flowchart form in FIG. 8, and begins when the system 300, 400 senses that one (or one pair) of the control vanes 118 is inoperable (STEP 802). This may be accomplished directly, via actuator and/or control vane position feedback, or indirectly by sensing that the UAV 100 is not implementing the commanded maneuver. When one or more control vanes 118 are determined to be inoperable, the position of the inoperable control vane(s) is then determined (STEP 804). This may be accomplished directly, via actuator and/or control vane position feedback, or indirectly, as noted above, using the last commanded control vane position. Thereafter, new control vane position commands are determined, based on the determined position of the inoperable control vane, which will also cause the UAV 100 to implement the commanded maneuver (STEP 806).

The specific manner in which the flight control system 300, 400 implements the process 800 described above and depicted in FIG. 8 will now be described in more detail. Beginning first with a description of its implementation in a UAV 100 that includes the flight control system 300 depicted in FIG. 3, followed by a description of its implementation in a UAV 100 that includes with the flight control system 400 depicted in FIG. 4.

In the unlikely, yet postulated even that a single pair of control vanes 118 becomes inoperable in a UAV 100 that is implemented with the flight control system 300 depicted in FIG. 3, it is assumed that the pair of control vanes 118 became operable in the last commanded position prior to becoming inoperable. Thus, the control vanes 118 in that pair would be locked into the same position. As a result, the control algorithm will invoke new positions constraints. So, for example, if the first pair of control vanes 118-1, 118-2 were to become inoperable, and the last commanded position supplied to the first pair of control vanes 118-1, 118-2 was $f_1$, then the new position constraints would be:

$$d_1 = f_1$$

$$d_{min} \leq d_2 \leq d_{max}$$

$$d_{min} \leq d_3 \leq d_{max}$$

$$d_{min} \leq d_4 \leq d_{max}$$

The vane allocation equations delineated above can then be reduced to a system of 3 equations ($\delta a$, $\delta e$, and $\delta r$) and three unknowns ($d_2$, $d_3$, and $d_4$):

$$\delta a = \frac{1}{4}\left(f_1 + d_2 - d_3 - d_4\right)$$

$$\delta e = \frac{1}{4}\left(f_1 + d_2 + d_3 + d_4\right)$$

$$\delta r = \frac{1}{4}\left(-f_1 + d_2 + d_3 - d_4\right)$$

$$d_2 - d_3 - d_4 = 4\delta a - f_1$$

$$d_2 + d_3 + d_4 = 4\delta e - f_1$$

$$d_2 + d_3 - d_4 = 4\delta r + f_1$$

As may be appreciated, this set of constraints can be extended to inoperability of any single pair of control vanes 118.

The above example can be extended to the case of two pairs of control vanes 118 becoming inoperable. For example, assume that both the first pair 118-1, 118-2 and the second pair 118-3, 118-4 of control vanes became inoperable, and that the last commanded positions were $f_1$ and $f_2$, respectively. In this case, the new position constraints would be:

$$d_1 = f_1$$

$$d_2 = f_2$$

$$d_{min} \leq d_3 \leq d_{max}$$

$$d_{min} \le d_4 \le d_{max}$$

And the set of vane allocation equations becomes:

$$\delta a = \frac{1}{4}\left(f_1 + f_2 - d_3 - d_4\right)$$

$$\delta e = \frac{1}{4}\left(f_1 + f_2 + d_3 + d_4\right)$$

It may be observed from the above that the rudder command equation ($\delta r$) is not used in solving for the vane command allocations. This is possible the airframe designs for the UAV 100 are not statically stable. Thus, the flight control system 300 constantly adjusts the pitch and roll attitudes of the UAV 100 to ensure that the vehicle does not tip over into an unrecoverable attitude. Relaxing the rudder constraint allows the vehicle to yaw (e.g., spin) about its z-axis, and allows the UAV operator to land the vehicle in a controlled manner, while minimizing damage to the engine and avionics, though potentially sacrificing the landing gear and control vanes 118. This is allowable since the landing gear and control vanes 118 are relatively easy to replace and are relatively inexpensive. Although 2 vane actuator failures would severely degrade vehicle performance, the operator might be able to maneuver the UAV 100 to a safer location and attempt to land it with less damage to the UAV 100 and lower exposure to possible injury of the flight team and observers.

A specific description of the general process 800 as applied to the flight control system 400 of FIG. 4, in which each of the control vanes 118 is independently controlled, will now be provided. For this UAV 100 and flight control system 400 configuration, the number of vane allocation equations doubles into the following system of equations:

$$\delta a_1 = \frac{1}{4}\left(d_{1.1} + d_{2.1} - d_{3.1} - d_{4.1}\right)$$

$$\delta e_1 = \frac{1}{4}\left(d_{1.1} + d_{2.1} + d_{3.1} + d_{4.1}\right)$$

$$\delta r_1 = \frac{1}{4}\left(-d_{1.1} + d_{2.1} + d_{3.1} - d_{4.1}\right)$$

$$\delta a_2 = \frac{1}{4}\left(d_{1.2} + d_{2.2} - d_{3.2} - d_{4.2}\right)$$

$$\delta e_2 = \frac{1}{4}\left(d_{1.2} + d_{2.2} + d_{3.2} + d_{4.2}\right)$$

$$\delta r_2 = \frac{1}{4}\left(-d_{1.2} + d_{2.2} + d_{3.2} - d_{4.2}\right)$$

where,

$\delta a_1$ is the aileron control contribution from vane set 1,
$\delta a_2$ is the aileron control contribution from vane set 2,
$\delta e_1$ is the elevator control contribution from vane set 1,
$\delta e_2$ is the elevator control contribution from vane set 2,
$\delta r_1$ is the rudder control contribution from vane set 1, and
$\delta r_2$ is the rudder control contribution from vane set 2;

and where,

vane set 1 corresponds to the control vanes 118 controlled by the actuators 306 that are labeled in FIG. 4 as $d_{1.1}$, $d_{2.1}$, $d_{3.1}$, and $d_{4.1}$, and

vane set 2 corresponds to the control vanes 118 controlled by the actuators 306 that are labeled in FIG. 4 as $d_{1.2}$, $d_{2.2}$, $d_{3.2}$, and $d_{4.2}$.

As may be appreciated, when the UAV 100 is operating properly, with no stuck or otherwise inoperable actuators 306 or control vanes 118, the above calculation is carried out subject to the following constraints:

$$d_{min} \le d_{1.1} \le d_{max}$$

$$d_{min} \le d_{1.2} \le d_{max}$$

$$d_{min} \le d_{2.1} \le d_{max}$$

$$d_{min} \le d_{2.2} \le d_{max}$$

$$d_{min} \le d_{3.1} \le d_{max}$$

$$d_{min} \leq d_{3.2} \leq d_{max}$$

$$d_{min} \leq d_{4.1} \leq d_{max}$$

$$d_{min} \leq d_{4.2} \leq d_{max}$$

$$r_{min} \leq \frac{d_{1.1}}{dt} \leq r_{max}$$

$$r_{min} \leq \frac{d_{2.1}}{dt} \leq r_{max}$$

$$r_{min} \leq \frac{d_{3.1}}{dt} \leq r_{max}$$

$$r_{min} \leq \frac{d_{4.1}}{dt} \leq r_{max}$$

$$r_{min} \leq \frac{d_{1.2}}{dt} \leq r_{max}$$

$$r_{min} \leq \frac{d_{2.2}}{dt} \leq r_{max}$$

$$r_{min} \leq \frac{d_{3.2}}{dt} \leq r_{max}$$

$$r_{min} \leq \frac{d_{4.2}}{dt} \leq r_{max}$$

where,

$r_{min}$ is the minimum angular rate of change for the vane. (Note, all vanes are assumed to have the same angular rate of change, and

$r_{max}$ is the maximum angular rate of change for the vane.

In the unlikely, yet postulated event that a single control vane 118 were to become inoperable in a UAV 100 that is implemented with the flight control system 400 depicted in FIG. 4, it is again assumed that the control vane 118 became operable in the last commanded position prior to becoming inoperable. Thus, the control vane 118 would be locked into the same position. As a result, the control algorithm will invoke new position constraints. So, for example, if the second control vane 118-2 in the first pair of control vanes 118-1, 118-2 were to become inoperable, and the last commanded position supplied to the first pair of control vanes 118-1, 118-2 was $f_{1.2}$, then the new position constraints would be:

$$d_{min} \leq d_{1.1} \leq d_{max}$$

$$d_{1.2} = f_{1.2}$$

$$d_{min} \leq d_{2.1} \leq d_{max}$$

$$d_{min} \leq d_{2.2} \leq d_{max}$$

$$d_{min} \leq d_{3.1} \leq d_{max}$$

$$d_{min} \leq d_{3.2} \leq d_{max}$$

$$d_{min} \leq d_{4.1} \leq d_{max}$$

$$d_{min} \leq d_{4.2} \leq d_{max}$$

The vane allocation equations delineated above become:

$$\delta a_1 = \frac{1}{4}\left(d_{1.1} + d_{2.1} - d_{3.1} - d_{4.1}\right)$$

$$\delta e_1 = \frac{1}{4}\left(d_{1.1} + d_{2.1} + d_{3.1} + d_{4.1}\right)$$

$$\delta r_1 = \frac{1}{4}\left(-d_{1.1} + d_{2.1} + d_{3.1} - d_{4.1}\right)$$

$$\delta a_2 = \frac{1}{4}\left(f_{1.2} + d_{2.2} - d_{3.2} - d_{4.2}\right)$$

$$\delta e_2 = \frac{1}{4}\left(f_{1.2} + d_{2.2} + d_{3.2} + d_{4.2}\right)$$

$$\delta r_2 = \frac{1}{4}\left(-f_{1.2} + d_{2.2} + d_{3.2} - d_{4.2}\right)$$

It should be noted that each of the desired control surface commands ($\delta a$, $\delta e$, and $\delta r$) is the sum of the contributions from each vane 118:

$$\delta a = \delta a_1 + \delta a_2$$

$$\delta e = \delta e_1 + \delta e_2$$

$$\delta r = \delta r_1 + \delta r_2$$

Whereas, in the case of a ganged set of vanes (e.g., pairs of control vanes 118 coupled together), the vane contributions are assumed to be equal such that each control vane 118 contributes one half of the desired control forces, as shown below:

$$\delta a_1 = \delta a_2 = \frac{\delta a}{2}$$

$$\delta e_1 = \delta e_2 = \frac{\delta e}{2}$$

$$\delta r_1 = \delta r_2 = \frac{\delta r}{2}$$

However, when the control vanes 118 are independently controlled, it is possible for a vane 118 in a pair to contribute more or less than the other control vane 118 to overcome the other control vane 118 becoming inoperable, and still achieve the desired result.

Continuing the example, it is now assumed that control vanes 118-2 and 118-4, which are associated with the second actuator set, have become inoperable at deflections $f_{1.2}$ and $f_{2.2}$. In this case, the vane allocation equations are solved subject to the following constraints:

$$d_{min} \le d_{1.1} \le d_{max}$$

$$d_{1.2} = f_{1.2}$$

$$d_{min} \le d_{2.1} \le d_{max}$$

$$d_{2.2} = f_{2.2}$$

$$d_{min} \le d_{3.1} \le d_{max}$$

$$d_{min} \le d_{3.2} \le d_{max}$$

$$d_{min} \le d_{4.1} \le d_{max}$$

$$d_{min} \le d_{4.2} \le d_{max}$$

As may be readily apparent from the above constraints, any solution will satisfy only six of the vane allocation equations, but not all 8. There are 3 possible approaches to meeting the constraints. These are: relax meeting the rudder command ($\delta r_2$), relax the constraint with the smallest impact to the control surface commands ($\delta a$, $\delta e$, $\delta r$), or treat the vane allocation as an optimal control allocation problem as described in paragraphs [0028], [0029], and [0030]. With the first approach, the rudder command difference ($\Delta r$) (desired rudder command minus realized rudder command for the inoperable control vanes) is reallocated to the other control vane equations ($\delta r_{1new} = \delta r_1 + \Delta r$), as follows:

$$\Delta r = \delta r - \delta r_2$$

*where,*

$$\delta r_2 = \frac{1}{4}\left(-f_{2.1} + f_{2.2} + d_{2.3} - d_{2.4}\right)$$

Given that the vanes for the first set of actuators remain operable, the vane allocations for the first set could be solved for using the following set of equations. These allocations imply a failure of two vanes should be tolerated provided that the vane deflection constraints for all vanes are met.

$$\delta a_1 = \frac{1}{4}\left(d_{1.1} + d_{2.1} - d_{3.1} - d_{4.1}\right)$$

$$\delta e_1 = \frac{1}{4}\left(d_{1.1} + d_{2.1} + d_{3.1} + d_{4.1}\right)$$

$$\delta r_1 + \Delta r = \frac{1}{4}\left(-d_{1.1} + d_{2.1} + d_{3.1} - d_{4.1}\right)$$

This approach is algorithmically simple and can lead to complications when trying to extend the approach to greater numbers of failed vanes.

With the second approach, the constraint with the smallest impact to ($\delta a$, $\delta e$, $\delta r$) is relaxed and the difference is reallocated to the other vane set ($d_{1.1}$, $d_{2.1}$, $d_{3.1}$, and $d_{4.1}$). This approach results in solving three combinations of equations for $d_{3.2}$ and $d_{4.2}$ given $d_{1.2}$ and $d_{2.2}$ have failed in the $f_{1.2}$ and $f_{2.2}$ positions, respectively. First set of equations solves for the values of $d_{3.2}$ and $d_{4.2}$, given the difference ($\Delta r$) would be reallocated to vane set 1's rudder control surface command ($\delta r_1$) and not the elevator or aileron surface commands. The following system of equations is solved given the failed vane positions $f_{1.2}$ and $f_{2.2}$.

$$-d'_{3.2} - d'_{4.2} = 4\delta a_2 - f_{1.2} - f_{2.2}$$

$$d'_{3.2} + d'_{4.2} = 4\delta e_2 - f_{1.2} - f_{2.2}$$

The resulting rudder difference ($\Delta r$) would be:

$$\Delta r = \delta r - \delta r_2$$

where,

$$\delta r_2 = \frac{1}{4}\left(-f_{1.2} + f_{2.2} + d'_{3.2} - d'_{4.2}\right)$$

The next set of equations would solved for the values of $d_{3.2}$ and $d_{4.2}$, given the difference would be reallocated to vane set 1's elevator control surface command ($\delta e_1$) and not the rudder or aileron control surface commands. The following system of equations are used along with the failed vane positions $f_{1.2}$ and $f_{2.2}$:

$$-d''_{3.2} - d''_{4.2} = 4\delta a_2 - f_{1.2} - f_{2.2}$$

$$d''_{3.2} - d''_{4.2} = 4\delta r_2 + f_{1.2} - f_{2.2}$$

The resulting elevator difference ($\Delta e$) would be:

$$\Delta e = \delta e - \delta e''$$

where,

$$\delta e'' = \frac{1}{4}\left(-f_{1.2} + f_{2.2} + d''_{3.2} - d''_{4.2}\right)$$

With the third set off equations, the values of $d_{3.2}$ and $d_{4.2}$ are solved for given the difference would be reallocated to vane set 1's aileron control surface command ($\delta a_1$) and not the rudder or aileron control surface commands using the following system of equations with the failed vane positions $f_{1.2}$ and $f_{2.2}$:

$$d'''_{3.2} + d'''_{4.2} = 4\delta e - f_{1.2} - f_{2.2}$$

$$d'''_{3.2} - d'''_{4.2} = 4\delta r + f_{1.2} - f_{2.2}$$

The resulting aileron re-allocation would be:

$$\Delta a = \delta a - \delta a'''$$

where,

$$\delta a''' = \frac{1}{4}\left(-f_{1.2} + f_{2.2} + d'''_{3.2} - d'''_{4.2}\right)$$

Finally, the solution with lowest magnitude deviation (min ($\|\Delta a\|$, $\|\Delta e\|$, $\|\Delta r\|$)) is then selected and used in one of the following sets of equations.

Note, the following set would be used if $\|\Delta a\| < \|\Delta e\|$ and $\|\Delta a\| < \|\Delta r\|$:

$$\delta a_1 = \frac{1}{4}\left(d_{1.1} + d_{2.1} - d_{3.1} - d_{4.1}\right)$$

$$\delta e_1 = \frac{1}{4}\left(d_{1.1} + d_{2.1} + d_{3.1} + d_{4.1}\right)$$

$$\delta r_1 + \Delta r = \frac{1}{4}\left(-d_{1.1} + d_{2.1} + d_{3.1} - d_{4.1}\right)$$

or
this set would be used if $\|\Delta e\| < \|\Delta a\|$ and $\|\Delta e\| < \|\Delta r\|$:

$$\delta a_1 = \frac{1}{4}\left(d_{1.1} + d_{2.1} - d_{3.1} - d_{4.1}\right)$$

$$\delta e_1 + \Delta e = \frac{1}{4}\left(d_{1.1} + d_{2.1} + d_{3.1} + d_{4.1}\right)$$

$$\delta r_1 = \frac{1}{4}\left(-d_{1.1} + d_{2.1} + d_{3.1} - d_{4.1}\right)$$

or
this set would be used if $\|\Delta r\| < \|\Delta a\|$ and $\|\Delta r\| < \|\Delta e\|$:

$$\delta a_1 + \Delta a = \frac{1}{4}\left(d_{1.1} + d_{2.1} - d_{3.1} - d_{4.1}\right)$$

$$\delta e_1 = \frac{1}{4}\left(d_{1.1} + d_{2.1} + d_{3.1} + d_{4.1}\right)$$

$$\delta r_1 = \frac{1}{4}\left(-d_{1.1} + d_{2.1} + d_{3.1} - d_{4.1}\right)$$

This approach is algorithmically complex and can lead to complications when trying to account for all possible permutations of vane failures. Especially when trying to extend this to combinations of 3 or more vanes.

The third approach treats the allocation of the desired command across the remaining 6 surfaces as an optimal control allocation problem, as described in paragraphs [0028], [0029], and [0030] of this application. The advantage to using the optimal control allocation algorithm is that it is universal and does not require the recasting of the problem for each possible combination of actuator failures. In addition, the allocation is optimal in that it is the best solution given all the unknowns and constraints to include the failed vane positions ($f_{1.2}$ and $f_{2.2}$ in the example). Thus the constraints for the optimal allocation would be:

$$d_{min} \leq d_{1.1} \leq d_{max}$$

$$d_{1.2} = f_{1.2}$$

$$d_{min} \leq d_{2.1} \leq d_{max}$$

$$d_{2.2} = f_{2.2}$$

$$d_{min} \leq d_{3.1} \leq d_{max}$$

$$d_{min} \leq d_{3.2} \leq d_{max}$$

$$d_{min} \leq d_{4.1} \leq d_{max}$$

$$d_{min} \leq d_{4.2} \leq d_{max}$$

$$r_{min} \leq \frac{d_{1.1}}{dt} \leq r_{max}$$

$$r_{min} \leq \frac{d_{2.1}}{dt} \leq r_{max}$$

$$r_{min} \leq \frac{d_{3.1}}{dt} \leq r_{max}$$

$$r_{min} \leq \frac{d_{4.1}}{dt} \leq r_{max}$$

$$r_{min} \leq \frac{d_{1.2}}{dt} \leq r_{max}$$

$$r_{min} \leq \frac{d_{2.2}}{dt} \leq r_{max}$$

$$r_{min} \leq \frac{d_{3.2}}{dt} \leq r_{max}$$

$$r_{min} \leq \frac{d_{4.2}}{dt} \leq r_{max}$$

The resulting optimal allocation would share the effects of the lost vanes across all the control surfaces and resulting vane deflections to minimize the overall loss of control authority. The advantage here is not having to solve sets of equations as described above and that the process of solving for an optimal allocation can be extended to more than 2 vanes with no additional effort. The additional vane failures can be accounted for as with the example by setting that vane's constraint to the vane's failed position.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A flight control system (300) for an unmanned air vehicle (UAV) (100) that includes a plurality of independently controllable control vanes (118), the system (300) comprising:

    a plurality of independent control vane (118) actuators (306), each actuator coupled to a different one of the control vanes (118);
    an actuator controller (304) coupled to the control vane (118) actuators (306) and further coupled to receive control vane (118) position commands, the actuator controller (304) configured, in response to the control vane (118) position commands, to control the control vane (118) actuators (306) to move each of the control vanes (118) to positions that will cause the uav (100) to implement a commanded maneuver; and
    a mission controller (302) coupled to the actuator controller (304), the mission controller (302) adapted to receive flight control signals and configured, in response thereto, to supply the control vane (118) position commands, the mission controller (302) further configured to:

        sense that one of the control vanes (118) is inoperable,
        determine the position of the inoperable control vane (118), and
        determine new control vane (118) position commands, based on the determined position of the inoperable control vane (118), that will also cause the UAV (100) to implement the commanded maneuver.

2. The system (300) of Claim 1, wherein:

    each control vane (118) has at least a minimum position constraint and a maximum position constraint; and
    the mission controller (302) is further configured to determine the new control vane (118) position commands additionally based on the minimum and maximum position constraints.

3. The system (300) of Claim 2, wherein the new control vane (118) position commands limit control vane (118) movement to the minimum and maximum position constraints.

4. The system (300) of Claim 2, wherein the mission controller (302) is further configured to:

    sense that a second one of the control vanes (118) is inoperable;
    determine the position of the second inoperable control vane (118);
    determine new control vane (118) position commands, based on the determined position of the first and second inoperable control vanes (118), that will also cause the uav (100) to implement the commanded maneuver.

5. The system (300) of Claim 2, wherein the mission controller (302) is configured to command the UAV (100) to maneuver about a roll axis, a pitch axis, and a yaw axis.

FIG. 1

FIG. 2

FIG. 3

FIG. 4

EP 2 594 484 A2

ROLL/AILERON

PITCH/ELEVATOR

YAW/RUDDER

FIG. 5

FIG. 6

FIG. 7

*800*

FIG. 8